# EUROPÄISCHE PATENTSCHRIFT

(11) **EP 3 308 050 B1**
(45) Veröffentlichungstag und Bekanntmachung des Hinweises auf die Patenterteilung: **29.09.2021**
(21) Anmeldenummer: 16727489.3
(22) Anmeldetag: 07.06.2016
(51) Int. Cl.: F16D 65/097, F16D 65/54

(54) **SCHEIBENBREMSE FÜR EIN KRAFTFAHRZEUG UND BREMSBELAGANORDNUNG HIERFÜR**
VEHICLE DISC BRAKE AND BRAKE PAD THEREFOR
FREIN À DISQUE D'UN VÉHICULE ET GARNITURE DE FREIN D'UN FREIN À DISQUE

(30) Priorität: 12.06.2015 DE 102015007523
(43) Veröffentlichungstag der Anmeldung: 18.04.2018
(73) Patentinhaber: ZF Active Safety GmbH, 56070 Koblenz (DE)
(72) Erfinder: MALLMANN, Markus, 56291 Pfalzfeld (DE)
(74) Vertreter: ZF Friedrichshafen AG
(86) Internationale Anmeldenummer: PCT/EP2016/062874
(87) Internationale Veröffentlichungsnummer: WO 2016/198386

(56) Entgegenhaltungen:
- EP-A1- 2 792 899
- WO-A1-2016/124389
- DE-A1-102012 016 737
- US-B2- 8 397 880

## Beschreibung

Die vorliegende Erfindung betrifft eine Scheibenbremse für ein Kraftfahrzeug nach Patentanspruch 1 und eine Bremsbelaganordnung nach Anspruch 9. Insbesondere betrifft die vorliegende Erfindung eine Scheibenbremse umfassend eine Führung, in der wenigstens eine Bremsbelaganordnung bremswirksam verlagerbar geführt ist, wobei die Bremsbelaganordnung einen Bremsbelagträger aufweist, an dem ein Fahrzeugbremsbelag angebracht ist, der mit einer Bremsscheibe zum Erzielen einer Bremswirkung in Wechselwirkung bringbar ist, wobei der Bremsbelagträger wenigsten eine Haltezunge aufweist, wobei die Führung wenigstens einen Aufnahmebereich aufweist und wobei die Haltezunge in dem wenigstens einen Aufnahmebereich in einer Betätigungsrichtung geführt aufnehmbar ist, wobei an der wenigstens einen Haltezunge eine Rückstelleinrichtung anliegt, über die eine entgegen der Betätigungsrichtung wirkende Rückstellkraft in Folge einer elastischen Deformation durch bremswirksame Auslenkung der Bremsbelaganordnung auf diese aufbringbar ist und wobei die Rückstelleinrichtung einen elastisch verformbaren Bereich zur Rückstellung des Bremsbelagträgers und einen sich daran anschließenden plastisch verformbaren Bereich zur bleibenden Anpassung an einen Verschleiß des Fahrzeugbremsbelags aufweist.

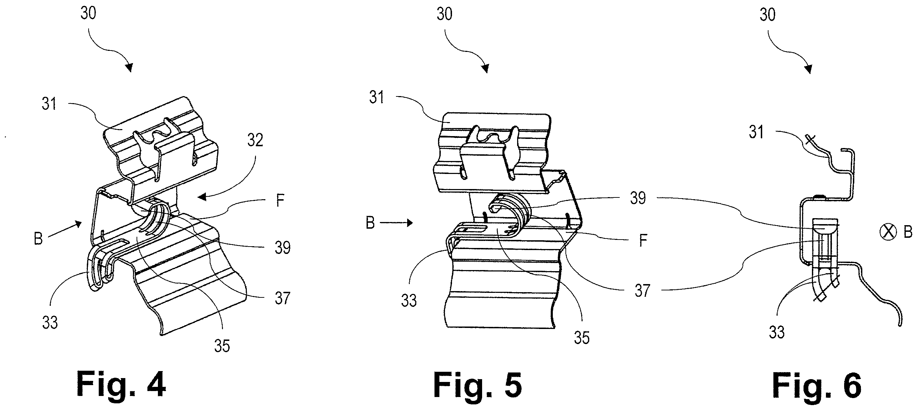

Derartige Scheibenbremsen sind aus dem Stand der Technik bekannt. So zeigt beispielsweise das Dokument DE 10 2012 016 737 A1 eine Scheibenbremse, welche eine Rückstelleinrichtung in Form einer Rückstellfeder aufweist. Diese Rückstellfeder weist zwei in Fig. 6 gezeigte gebogene Bereiche auf, die sich im Normalbetrieb der Scheibenbremse zur Rückstellung der Bremsbelaganordung jeweils elastisch verformen lassen und zur Kompensation eines Bremsbelagverschleißes jeweils plastisch verformen lassen. Folglich dienen in dem genannten Dokument ein und dieselben Bereiche sowohl als elastisch verformbare Bereiche zur Rückstellung als auch als plastisch verformbare Bereiche zur Verschleißkompensation.

Eine derartige funktionelle Verbindung von Rückstellung und Verschleißkompensation sieht auch das Dokument US 8 397 880 B2 vor, welches insbesondere in den Figuren 8A und 8B einen ebenfalls gebogenen Bereich in der gezeigten Rückstelleinrichtung zeigt, welcher als elastisch verformbarer Bereich zur Rückstellung sowie auch als plastisch verformbarer Bereiche zur Verschleißkompensation dient.

Bei derartigen Systemen mit elastischer und plastischer Verformung ein und desselben Bereichs kann es insbesondere bei starkem zu kompensierenden Verschleiß zur Beeinträchtigung der Rückstellung der Bremsbeläge kommen.

Es ist daher eine Aufgabe der vorliegenden Erfindung, eine Scheibenbremse und eine Bremsbelaganordung bereitzustellen, bei welcher eine Verschleißkompensation keine Auswirkung auf die Rückstelleigenschaften hat.

Diese Aufgabe wird durch eine Scheibenbremse für ein Kraftfahrzeug mit den Merkmalen des Patentanspruchs 1 gelöst. Dennoch ist bei einer Scheibenbremse der eingangs bezeichneten Art vorgesehen, dass die Rückstelleinrichtung, vorzugsweise der plastisch verformbare Bereich, aufgrund einer darauf in der Betätigungsrichtung wirkenden Kraft entlang einer Fläche des Aufnahmebereichs [Rückstelleinrichtung kann an allen Flächen der Führung angebracht sein] erst dann plastisch verformbar ist, wenn die Rückstelleinrichtung, vorzugsweise der elastisch verformbare Bereich, aufgrund dieser Kraft eine vorbestimmte, ausschließlich elastische Verformung angenommen hat. Eine plastische Verformung tritt also erfindungsgemäß auch dann ein, wenn das zur Verfügung stehende Ausmaß an elastischer Verformung voll ausgeschöpft ist.

Insbesondere sieht die Erfindung vor, dass der plastisch verformbare Bereich schleifenförmig, d.h. schlaufenförmig, ausgebildet ist und unmittelbar an der Haltezunge anliegt sowie in der Lage ist, bei der plastischen Verformung entlang der jeweils zugeordneten Fläche abzurollen. Dadurch kann die zur Verschleißkompensation verfügbare fortlaufende plastische Verformung zunehmend gehemmt werden, und zwar so weit, dass bei einer definierten Verformungsstrecke entlang der Fläche, welche z.B. der Verschleißgrenze der Bremsbeläge entspricht, schließlich keine weitere plastische Verformung stattfinden kann.

Vorzugsweise ist der plastisch verformbare Bereich gleichzeitig auch der elastisch verformbare Bereich, wobei vorzugsweise Aussparungen entlang einer Längsrichtung des Bereichs die Verformbarkeit definieren. Die Verformbarkeit definiert dabei die Rückstelleigenschaften wie beispielsweise die Höhe der Rückstellkräfte und die Geschwindigkeit der Rückstellung.

Alternativ erstreckt sich der elastisch verformbare Bereich in einer von dem plastisch verformbaren Bereich verschiedenen Richtung. Auf diese Weise kann der von der Rückstelleinrichtung innerhalb der Scheibenbremse benötigte Bauraum reduziert werden. Des Weiteren kann dadurch die Richtung der Wirkkräfte beider Bereiche zur besseren Trennung von Rückstellung und Verschleißkompensation gewählt werden.

Grundsätzlich kann der elastisch verformbare Bereich einarmig oder mehrarmig ausgebildet sein. Zur individuellen Einstellung der Federkurve für die elastische Verformung kann der elastisch verformbare Bereich mindestens zwei ausgebildete Ausbuchtungen aufweisen. Diese können gleiche oder unterschiedliche Längen aufweisen.

Eine Weiterbildung der Erfindung sieht vor, dass die Rückstelleinrichtung einen Anschlag aufweist, welcher dazu vorgesehen ist, den Federweg des elastisch verformbaren Bereichs zu begrenzen, so dass jede weitere Verschiebung der Haltezunge in Betätigungsrichtung zu einer plastischen Verformung des plastisch verformbaren Bereichs führt. Ein solcher Anschlag bewirkt einen sprungartigen Anstieg der Steifigkeit des elastisch verformbaren Bereichs, was wiederum die plastische Verformung des plastisch verformbaren Bereichs zur Verschleißkompensation einleitet.

Eine Verbesserung der Fertigung und/oder der Instandhaltung einer erfindungsgemäßen Scheibenbremse wird erfindungsgemäß beispielsweise dadurch erreicht, dass die Rückstelleinrichtung mindestens zwei miteinander wirkverbundene Elemente aufweist, wobei ein Element nur den plastisch verformbaren Bereich aufweist. Auf diese Weise können der elastisch verformbare Bereich und der plastisch verformbare Bereich einfacher hergestellt werden. Des Weiteren kann nach einer Verschleißkompensation und einem Austausch des verschlissenen Bremsbelags gegen einen neuen Bremsbelag nur das Element mit dem plastisch verformbaren Bereich ausgetauscht werden.

Vorteilhafterweise sieht die Erfindung vor, dass die Haltezunge zur plastischen Verformung des plastisch verformbaren Bereichs auf diesem entlang gleitet, so dass der Bereich entsprechend seiner Anlagefläche mit der Haltezunge umgeformt wird. Vorzugsweise ist die Anlagefläche die dieser gegenüberliegende Fläche der Haltezunge, mit welcher die Haltezunge auf dem plastisch verformbaren Bereich aufliegt. Auf diese Weise wird eine Bauraumeinsparung erreicht, da es zu einer Synergie zwischen Haltezunge und plastisch verformbaren Bereich bei dessen plastischer Verformung kommt.

Eine maximale Verschleißkompensation kann dadurch genau festgelegt werden, dass die Haltezunge unmittelbar an dem Endabschnitt des plastisch verformbaren Bereichs angreift, welcher die Verschiebung der Haltezunge in Betätigungsrichtung nach einer vollständigen plastischen Verformung durch Formschluss mit der Haltezunge begrenzt. In diesem Zustand kann verhindert werden, dass die Bremsbeläge einen übermäßigen Verschleiß erfahren, der zu einer unzureichenden Funktionsweise, bis hin zu einem unerwünschten Abgleiten der Beläge in den Spalt zwischen Bremsscheibe und Bremsträger führen kann.

Insbesondere kann gemäß der Erfindung die Rückstelleinrichtung aus Blech geformt sein, welche einen auskragenden, elastisch verformbaren und schleifenförmigen Bereich sowie einen sich daran anschließenden in den Aufnahmebereich hineinragenden plastisch verformbaren Bereich aufweist, wobei Aussparungen im Blech die elastische sowie plastische Verformbarkeit definieren. Auf diese Weise wir eine kompakte Bauweise unter Ausnutzung des vorhandenen Raumes zur Führung der Haltezunge erreicht.

Die Erfindung betrifft ferner eine Bremsbelaganordnung für eine Scheibenbremse nach einem der vorhergehenden Ansprüche, wobei die Bremsbelaganordnung einen Bremsbelagträger aufweist, an dem ein Fahrzeugbremsbelag angebracht ist, der mit einer Bremsscheibe zum Erzielen einer Bremswirkung in Wechselwirkung bringbar ist, wobei der Bremsbelagträger wenigstens eine Haltezunge aufweist und wobei die Führung wenigstens einen Führungsabschnitt aufweist, wobei die Haltezunge in dem wenigstens einen Führungsabschnitt in einer Betätigungsrichtung geführt aufnehmbar ist, wobei an der wenigstens einen Haltezunge eine Rückstelleinrichtung angebracht ist, über die eine entgegen der Betätigungsrichtung wirkende Rückstellkraft in Folge einer elastischen Deformation durch bremswirksame Auslenkung der Bremsbelaganordnung auf diese aufbringbar ist, wobei die Rückstelleinrichtung einen elastisch verformbaren Bereich zur Rückstellung des Bremsbelagträgers und einen sich daran anschließenden plastisch verformbaren Bereich zur bleibenden Anpassung an einen Verschleiß des Fahrzeugbremsbelags aufweist, und wobei der plastisch verformbare Bereich aufgrund einer darauf in der Betätigungsrichtung wirkenden Kraft entlang einer Fläche des Aufnahmebereichs erst dann plastisch verformbar ist, wenn der elastisch verformbare Bereich aufgrund dieser Kraft eine vorbestimmte, ausschließlich elastische Verformung angenommen hat.

Vorzugsweise haben zwei in entgegengesetzte Richtungen wirkende Rückstelleinrichtungen einen gemeinsamen, einstückigen Grundkörper. Auf diese Weise erfolgt die Montage und Demontage in der Produktion und Instandhaltung schneller und einfacher. Ein solcher Grundkörper kann bevorzugt U-förmig sein und mittels eines Verbindungsbügels die Rückstelleinrichtungen miteinander verbinden, wobei der Verbindungsbügel gleichzeitig zur Befestigung am Bremsträger dient. Vorzugsweise sind zusätzliche Befestigungsfortsätze vorhanden, die jeweils symmetrisch nach innen in den U-förmigen Grundkörper gerichtet und zur Befestigung am Bremsträger geeignet sind.

Die Erfindung wird im Folgenden beispielhaft anhand der beiliegenden Figuren erläutert. Es zeigen:
- Fig. 1: eine räumliche Darstellung einer erfindungsgemäßen Scheibenbremse;
- Fig. 2: eine räumliche Darstellung des Bremsträgers der erfindungsgemäßen Scheibenbremse aus Fig. 1 mit montierten Führungen mit einer Rückstelleinrichtungen;
- Fig. 3: eine räumliche Darstellung des Bremsbelagträgers der erfindungsgemäßen Scheibenbremse aus Fig. 1 mit Haltezungen;
- Fig. 4, 5: räumliche Darstellungen einer in Fig. 2 gezeigten ersten Führung mit einer Rückstelleinrichtung gemäß einem ersten Ausführungsbeispiel;
- Fig. 6: eine seitliche Darstellung der ersten Führung mit der Rückstelleinrichtung aus Fig. 4, 5;
- Fig. 7: einen Querschnitt durch die in Fig. 1 gezeigte Scheibenbremse auf Höhe der Rückstelleinrichtung;
- Fig. 8: eine Vergrößerung des in Fig. 7 gezeigten Querschnitts;
- Fig. 9-11: räumliche Darstellungen der ersten Führung mit der Rückstelleinrichtung mit auf den plastisch verformbaren Bereich anliegender Haltezunge in drei Zuständen plastischer Verformung: wobei Fig. 9 keine, Fig. 10 eine mittlere und Fig. 11 eine maximale plastische Verformung zeigen;
- Fig. 12, 13: Querschnitte einer zweiten Führung mit einer Rückstelleinrichtung mit Anschlag gemäß einem zweiten Ausführungsbeispiel der Erfindung und in zwei Zuständen elastischer Verformung: wobei Fig. 12 keine und Fig. 13 eine maximale (am Anschlag anliegend) elastische Verformung zeigen;
- Fig. 14: eine seitliche Darstellung der zweiten Führung mit der Rückstelleinrichtung aus Fig. 12, 13;
- Fig. 15-17: räumliche Darstellungen der zweiten Führung mit der Rückstelleinrichtung mit auf den plastisch verformbaren Bereich anliegender Haltezunge in drei Zuständen plastischer Verformung: wobei Fig. 15 keine, Fig. 16 eine mittlere und Fig. 17 eine maximale plastische Verformung zeigen;
- Fig. 18: eine räumliche Darstellung einer dritten Führung mit einer Rückstelleinrichtung gemäß einem dritten Ausführungsbeispiels mit zweiteiligem Aufbau;
- Fig. 19: eine Vergrößerung der in Fig. 18 gezeigten Verbindungsstelle des zweiteiligen Aufbaus der dritten Rückstelleinrichtung;
- Fig. 20: einen Querschnitt durch die in Fig. 18, 19 gezeigte dritte Führung mit der Rückstelleinrichtung;
- Fig. 21: eine seitliche Darstellung der dritten Führung mit der Rückstelleinrichtung aus Fig. 18-20;
- Fig. 22, 23: befestigungsspezifische Ausführungen der Führung mit der Rückstelleinrichtung;
- Fig. 24, 25: zwei einstückig ausgebildete Führungen mit Rückstelleinrichtungen;
- Fig. 26, 27: Querschnitte durch eine vierte Führung mit einer Rückstelleinrichtung in Zuständen plastischer und elastischer Verformung;
- Fig. 28-30: räumliche Darstellungen der fünften Führung mit unterschiedlichen Aussparungen im verformbaren Bereich der Rückstelleinrichtungen; und
- Fig. 31, 32: ein Herstellungsverfahren der Rückstelleinrichtungen der fünften Führung.

Die nachfolgenden Ausführungsbeispiele unterscheiden sich im Wesentlichen bezüglich der Ausgestaltung ihrer Rückstelleinrichtungen voneinander.

### Ausführungsbeispiel 1

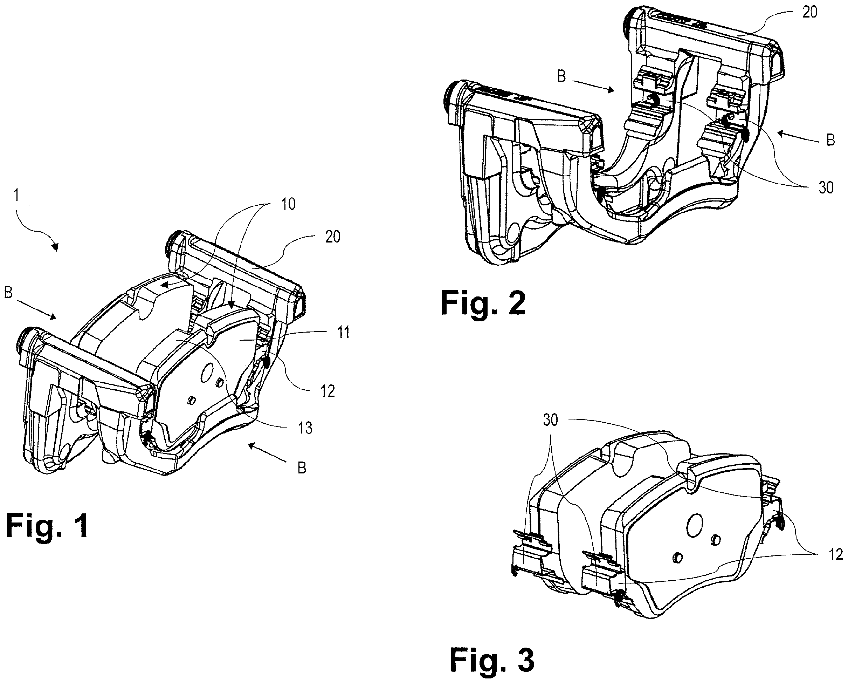

In der Figur 1 ist eine erfindungsgemäße Scheibenbremse 1 für ein Kraftfahrzeug gezeigt. Dabei sind zwei gegenüberliegende Bremsbelaganordnungen 10 zu erkennen, welche aus einem Bremsbelagträger 11 mit seitlichen Haltezungen 12 und einem Fahrzeugbremsbelag 13 aufgebaut sind. Die Bremsbelaganordnungen 10 sind einander auf ihrer Fahrzeugbremsbelagseite zugewandt und so voneinander beabstandet, dass eine nicht gezeigte Bremsscheibe dazwischen angeordnet werden kann und der Fahrzeugbremsbelag 13 mit der Bremsscheibe zum Erzielen einer Bremswirkung mit dieser in Wechselwirkung bringbar ist, indem die Bremsbelaganordnungen 10 in einer Betätigungsrichtung B bewegt werden. Diese Bewegung in der Betätigungsrichtung B kann in bekannter Weise über einen hydraulischen Betätigungsmechanismus bewirkt werden, wobei die Bremsbelaganordnungen 10 von einem Bremsträger 20 gehalten und mittels der Haltezungen 12 in diesem bremswirksam verlagerbar geführt sind.

In Figur 2 sind die Bremsbelaganordnungen 10 aus der Scheibenbremse 1 herausgenommen. Dabei sind aus Blech geformte Führungen 30 mit Rückstelleinrichtungen an dem Bremsträger 20 angebracht.

Figur 3 zeigt nur die Bremsbelaganordnungen 10 aus Figur 1 mit den Führungen 30, welche in der Darstellung die Haltezungen 12 der Bremsbelagträger 11 umgeben.

Die Figuren 4 und 5 zeigen zwei räumliche Darstellungen der Führungen 30. Diese sind als Blechformteile mit einem Grundkörper 31 ausgebildet und weisen einen U-förmigen Aufnahmebereich 32 auf, in dem die Haltezunge 12 in und entgegen der Betätigungsrichtung B geführt aufnehmbar ist. Dabei liegt an der Haltezunge 12 die Rückstellaneinrichtung an, über die eine entgegen der Betätigungsrichtung B wirkende Rückstellkraft in Folge einer elastischen Deformation durch bremswirksame Auslenkung der Bremsbelaganordnung 10 auf diese aufbringbar ist.

Die Rückstelleinrichtung 30 weist einen aus dem Grundkörper 31 der Führung 30 auskragenden, schleifenförmig ausgebildeten und elastisch verformbaren Bereich 33 zur Rückstellung des Bremsbelagträgers 10 sowie einen sich daran über einen Übergangsbereich 35 anschließenden, schleifenförmig ausgebildeten und plastisch verformbaren Bereich 37 zur bleibenden automatischen Kompensation eines Verschleißes des Fahrzeugbremsbelags 13 auf. Dabei ist zu erkennen, dass sich der elastisch verformbare Bereich 33 in einer von dem plastisch verformbaren Bereich 37 verschiedenen Richtung erstreckt. Der plastisch verformbare Bereich 37 ragt in den Aufnahmebereich 32 hinein. Die Eigenschaften zur elastischen sowie plastischen Verformbarkeit der jeweiligen Bereiche 33, 37 werden durch Aussparungen bzw. Ausschnitte im Material definiert. Am Ende des plastisch verformbaren Bereichs 37 schließt sich eine im Betrieb im Wesentlichen nicht verformbare Angriffslippe 39 als Endabschnitt 39 an, die als Krafteinleitungsstelle für die in Betätigungsrichtung B bewegte Haltezunge 12 dient. Des Weiteren ist eine Fläche des Grundkörpers 31 als Führungsfläche F bezeichnet, entlang welcher sich der Übergangsbereich 35 parallel erstreckt, wobei der plastisch verformbare Bereich 37 in der Lage ist, bei der plastischen Verformung entlang der Führungsfläche F abzurollen.

Figur 6 zeigt eine von links, d.h. in Betätigungsrichtung B, in den Figuren 4 und 5 betrachtete Seite der Führung 30. Darin ist zu erkennen, dass der elastisch verformbare Bereich 33 zwei unterschiedlich lang ausgebildete Arme aufweist, die zudem noch ins Innere der Scheibenbremse 1 platzsparend gekrümmt sind.

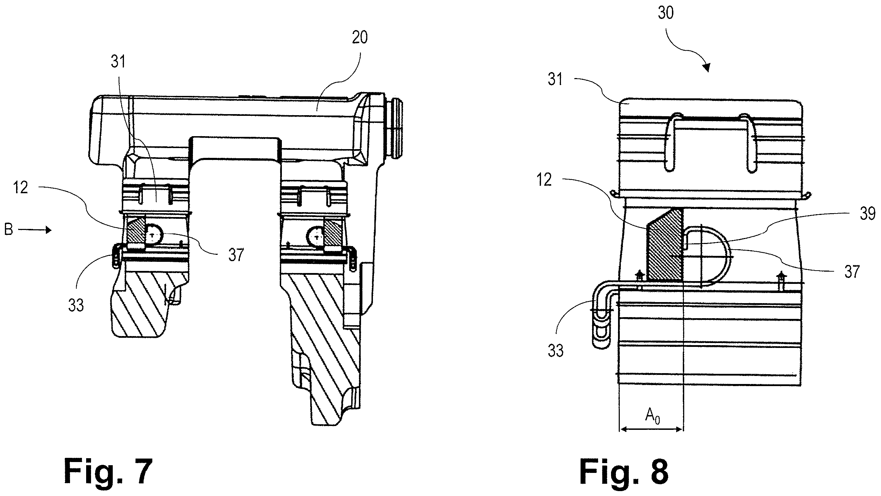

Figuren 7 und 8 zeigen einen jeweiligen Querschnitt durch die Führung 30 und die mit der Anschlaglippe 39 in Berührung gebrachte Haltezunge 12. Dabei ist es in dem in der Figur 8 gezeigten Zustand noch zu keiner elastischen oder plastischen Verformung gekommen. Dieser Zustand definiert einen bestimmten Führungsabstand Aₒ in der Ruhestellung, der parallel zur Führungsfläche F von dem linken Rand der Führungsfläche F, welcher dem elastisch verformbaren Bereich 33 zugewandt ist, bis zum Angriffspunkt der Haltezunge 12 an der Angriffslippe 39 gemessen wird.

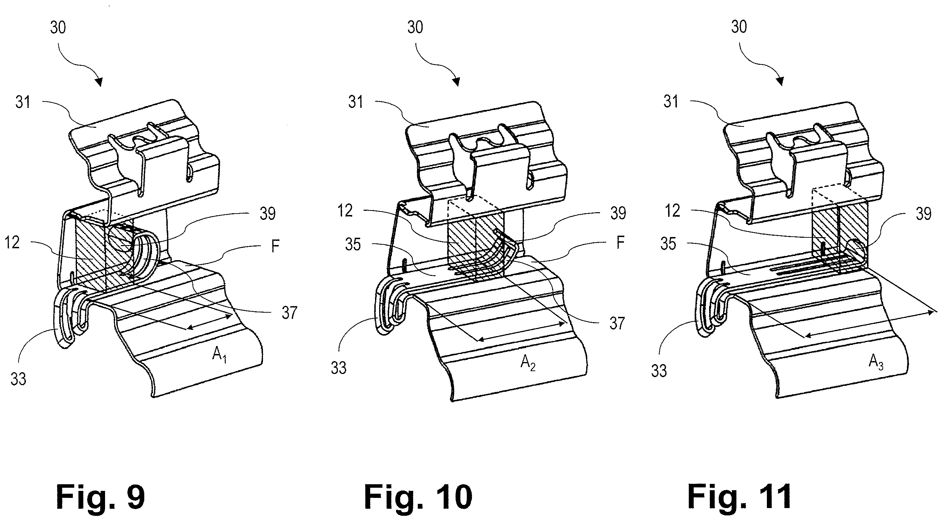

Die Figuren 9 bis 11 lassen den Verlauf der plastischen Verformung des plastisch verformbaren Bereichs 37 zur Verschleißkompensation erkennen.

In der Figur 9 hat noch keine plastische Verformung des plastisch verformbaren Bereichs 37 stattgefunden, denn der Führungsabstand A₁ gibt lediglich an, dass die maximale elastische Verformung des elastisch verformbaren Bereichs 33 erreicht ist und jede weitere Bewegung der Haltezunge 12 in die Bewegungsrichtung B zu einer bleibenden Verformung des plastisch verformbaren Bereichs 37 führen wird. Mit anderen Worten, der plastisch verformbare Bereich 37 ist aufgrund einer darauf in der Betätigungsrichtung B wirkenden Kraft entlang einer Führungsfläche F des Aufnahmebereichs 32 erst dann plastisch verformbar, wenn der elastisch verformbare Bereich 33 aufgrund dieser Kraft eine vorbestimmte, ausschließlich elastische Verformung angenommen hat und noch eine weitere Bewegung des Bremsbelags bei einer bremswirksamen Verlagerung möglich ist. Dieser Fall tritt nur dann ein, wenn der betreffende Fahrzeugbremsbelag 13 bereits soweit verschlissen ist, dass eine Bewegung der Haltezunge 12 in der Betätigungsrichtung B über eine längere Strecke als im Fall einer regulären Betriebsbremsung möglich wird. Dieser "Streckenunterschied" zwischen einem neuen und einem verschlissenen Fahrzeugbremsbelag 13 wird somit durch die plastische Verformung, und die damit verbundene Verschiebung des Berührungspunktes des Haltezunge 12 mit der Angriffslippe 39, bleibend ausgeglichen bzw. kompensiert.

In Figur 10 ist zu erkennen, dass die plastische Verformung eintritt, indem die Haltezunge 12 zur plastischen Verformung des plastisch verformbaren Bereichs 37 auf diesem entlang gleitet, wobei der Bereich 37 durch Wechselwirkung seiner Anlagefläche mit der Haltezunge 12 umgeformt wird. In der Folge wird der Führungsabstand A₂ im Vergleich zu A₁ vergrößert. Die Verschleißkompensation bzw. der bereits erwähnte "Streckenabstand" lässt sich mit A₂ ― A₁ berechnen.

Die Figur 11 zeigt die maximal mögliche Kompensation, bei welcher der plastisch verformbare Bereich 37 entlang der Führungsfläche F quasi vollständig ausgerollt ist. Dabei begrenzt der Endabschnitt 39 nach der vollständigen plastischen Verformung eine weitere Verschiebung der Haltezunge 12 in die Betätigungsrichtung B durch Formschluss mit der Haltezunge 12.

### Ausführungsbeispiel 2

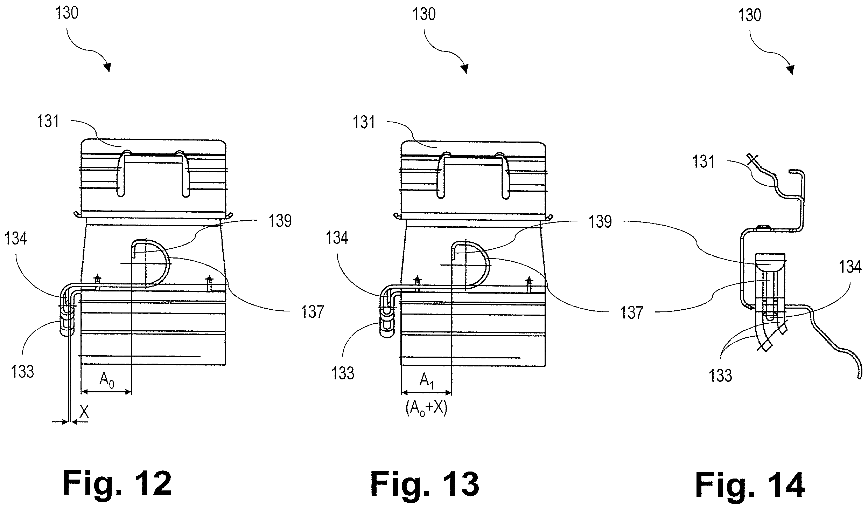

Das zweite Ausführungsbeispiel gemäß den Figuren 12 bis 17 unterscheidet sich von dem ersten Ausführungsbeispiel darin, dass die Rückstelleinrichtung einen Anschlag 134 aufweist, welcher in der Lage ist, den Federweg X des elastisch verformbaren Bereichs 133 zu begrenzen, so dass jede weitere Verschiebung der Haltezunge 12 in die Betätigungsrichtung B zu einer plastischen Verformung des plastisch verformbaren Bereichs 137 führt.

In diesem Zusammenhang zeigen die Figuren 12 und 13 die beiden Zustände des elastisch verformbaren Bereichs 133.

In Figur 12 ist noch keine elastische Verformung erfolgt, weshalb der gesamte Federweg X (>0) zur Verfügung steht, welcher von der inneren, in der Figur nach rechts gerichteten Fläche des Anschlags 134 zum gegenüberliegenden Anschlagpunkt gemessen wird. Der Führungsabstand in dieser Ruhestellung, der parallel zur Führungsfläche F von dem linken Rand der Führungsfläche F, welcher dem elastisch verformbaren Bereich 133 zugewandt ist, bis zum Angriffspunkt an der Angriffslippe 139 gemessen wird, ist mit A₀ bezeichnet.

In Figur 13 ist dieser Federweg X bereits aufgrund einer Betätigung der Bremsanlagenanordnung 10 und der damit verbundenen Haltezunge 12 in die Betätigungsrichtung B aufgebraucht (X=0). Der Anschlag 134 liegt an der gegenüberliegenden Anschlagfläche an. Folglich ist der Führungsabstand in diesem Zustand mit A₁ bezeichnet.

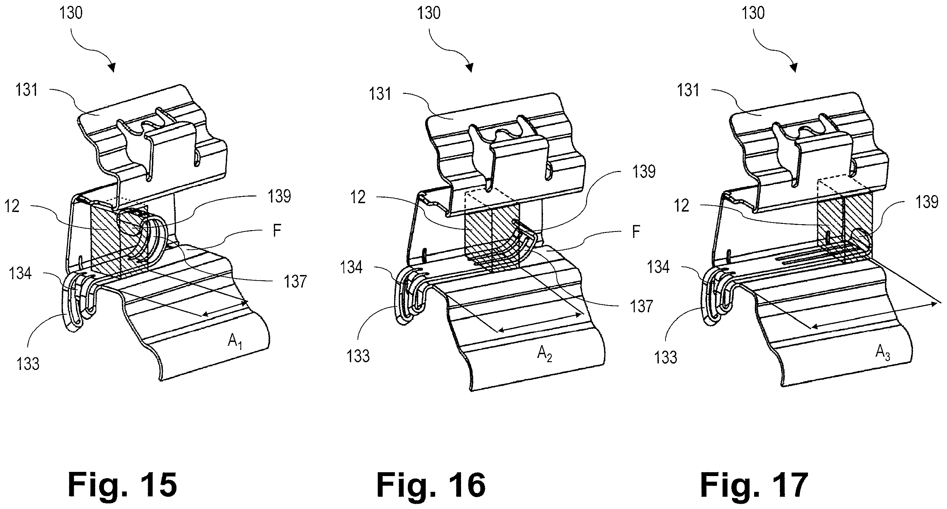

Figuren 15 bis 17 zeigen ebenso wie die Figuren 9 bis 11 des ersten Ausführungsbeispiels die plastische Verformung des plastisch verformbaren Bereichs 139, wobei ausgehend von einem Führungsabstand A1 in Figur 15 die maximale plastische Verformbarkeit in Figur 17 bei einem Führungsabstand von A3 erreicht ist.

### Ausführungsbeispiel 3

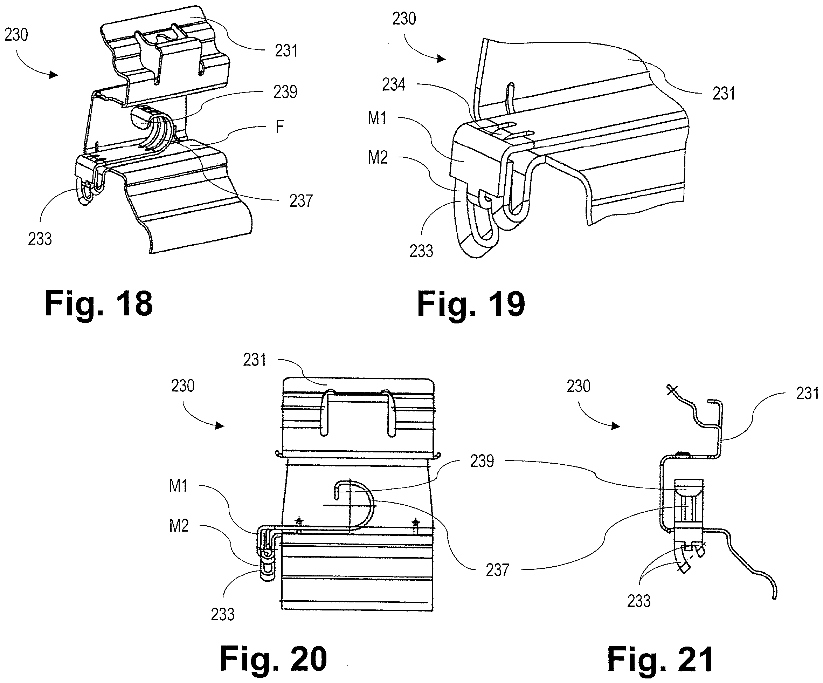

Das dritte Ausführungsbeispiel gemäß einer der Figuren 18 bis 21 unterscheidet sich von dem zweiten Ausführungsbeispiel darin, dass die Rückstelleinrichtung neben einem Anschlag 234 zwei separat ausgebildete, jedoch in dem gezeigten Zustand miteinander wirkverbundene Elemente M1, M2 aufweist, wobei das eine Element M1 nur den plastisch verformbaren Bereich 237 aufweist.

Die in Figur 18 gezeigte und in Figur 19 als vergrößerte Ansicht dargestellte Rückstelleinrichtung lässt einen Übergangsbereichs zwischen den Elementen M1 und M2 erkennen, wobei das Element M1 mittels eines Hakens in den elastisch verformbaren Bereich 233 des Elements M2 eingehakt wird und in der Betätigungsrichtung B auf diesem aufliegt, so dass sowohl bei der Betätigung als auch bei der Rückstellung der Bremsbelaganordnung 10, eine Druckbeanspruchung und keine Zugbeanspruchung, beispielsweise auf den Haken, herrscht. Während dieses Ausführungsbeispiel eine zwischen den Elementen M1 und M2 lösbare Verbindung vorsieht, kann auch eine unlösbare Verbindung, z.B. durch Kleben, Löten oder Schweißen, vorgesehen sein.

Die Figuren 20 und 21 entsprechen den aus den Figuren 12 und 14 des zweiten Ausführungsbeispiels bekannten Darstellungen der Rückstelleinrichtung, wobei die Besonderheit des zweiteiligen Aufbaus aus den Elementen M1 und M2 zu erkennen ist.

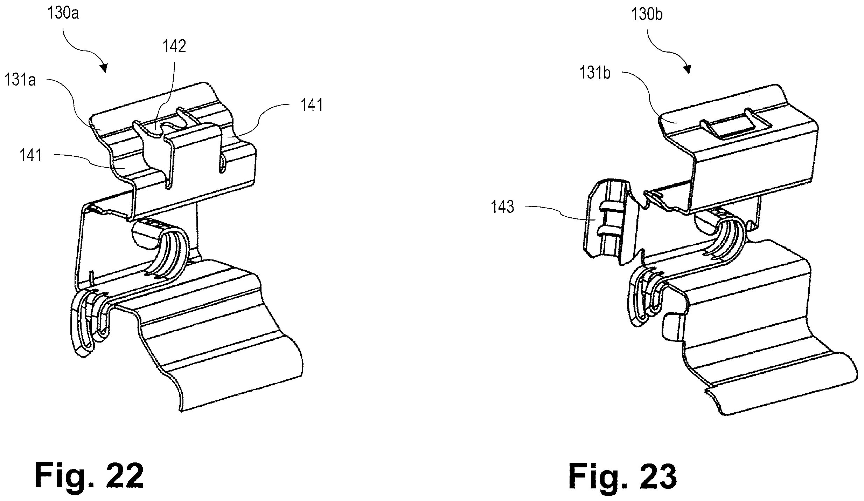

Die Figuren 22 und 23 zeigen zwei Führungen 130a und 130b gemäß dem zweiten Ausführungsbeispiel, wobei der Grundkörper 131a und 131b zur Befestigung an den Bremsträger 20 entsprechend angepasst ist. So sind in der Figur 22 Fixiervorsprünge 141 vorgesehen, die im Zusammenwirken mit zumindest einer Rastkralle 142 diese Befestigung sicherstellen. Zum gleichen Zweck sind in der Figur 23 zwei seitliche Rastkrallen 143 vorgesehen, die ebenfalls direkt am Bremsträger 20 angreifen.

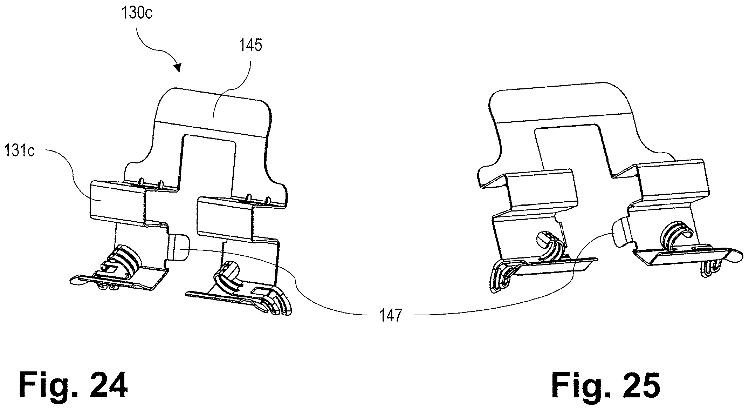

Die Figuren 24 und 25 zeigen Führungen 130c mit in entgegengesetzte Richtungen wirkenden Rückstelleinrichtungen, deren Grundkörper 131c über einen Verbindungsbügel 145 einstückig U-förmig verbunden sind. Dabei sind Befestigungsfortsätze 147 vorhanden, die jeweils symmetrisch nach innen in den U-förmigen Grundkörper 131c gerichtet und zur Befestigung am Bremsträger 20 geeignet sind. Auf diese Weise können beispielsweise die in Fig. 2 gezeigten Führungen 30 durch ein einziges Element ersetzt werden, was bei der Montage und Demontage in der Produktion und Instandhaltung von Vorteil ist. Ein derart einstückiger gemeinsamer Grundkörper kann für alle beschriebenen Ausführungsformen von Führungen mit Rückstelleinrichtungen vorgesehen werden.

### Ausführungsbeispiel 4

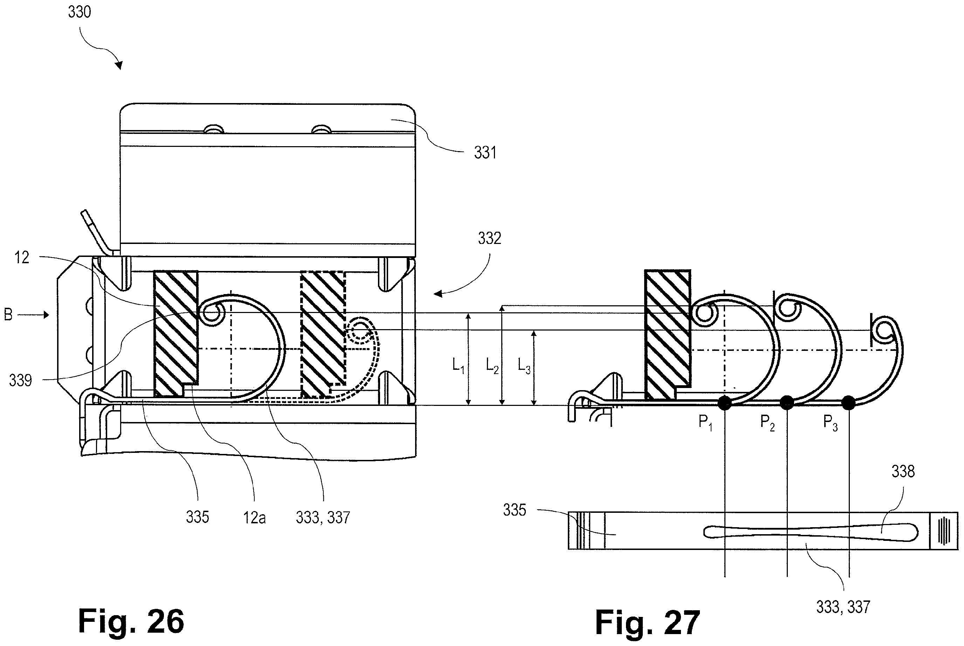

Das vierte Ausführungsbeispiel gemäß einer der Figuren 26 bis 32 unterscheidet sich von den vorherigen Ausführungsbeispielen darin, dass die Führung 330 eine Rückstelleinrichtung hat, die anstelle eines elastisch verformbaren Bereichs 33, 133, 233 und eines separaten plastisch verformbaren Bereichs 37, 137, 237, nunmehr einen einzigen Bereich 333, 337 für die elastische und plastische Verformbarkeit aufweist. Auf diese Weise kann dieser empfindliche Bereich 333, 337 vollständig innerhalb des Aufnahmebereichs 332 der Führung 300 angeordnet und der Haltezunge 12 des Bremsbelagträgers 11 in der Betätigungsrichtung B vorgelagert werden. Das spart nicht nur Bauraum, sondern mindert auch beim Austausch verschlissener Bauteile der Scheibenbremse 1 das Risiko einer Beschädigung des Bereichs 333, 337. Dabei bleibt der Bereich 333, 337 nach wie vor über den Übergangsbereich 335 an dem Grundkörper 331 der Führung 330 angeschlossen.

Darüber hinaus hat die Haltezunge 12 eine stufenförmige Aussparung 12a anstelle eines in der Bewegungsrichtung B dem Bereich 333, 337 zugewandten Randes, wodurch zwei Ränder entstehen, die eine Diagonale zwischen sich aufspannen, welche der Steigung des angrenzenden schleifenartigen Bereichs 333, 337 entspricht. Dadurch wird ein Verkanten der Haltezunge 12 am Bereich 333, 337 verhindert. Selbstverständlich muss die Aussparung 12a nicht unbedingt stufenförmig sein, sondern kann auch gefast, konkav oder konvex sein, wobei eine derartige Form der Haltezunge 12 auf alle hier beschriebenen Ausführungsbeispiele anwenden lässt.

Die Figuren 26 und 27 lassen den Verlauf der elastischen und plastischen Verformung des Bereichs 333, 337 erkennen.

In der Figur 26 ist der Bereich 333, 337 in zwei Zuständen gezeigt: links ist der Bereich 333, 337 mit durchgezogenen Linien dargestellt und in einem Grundzustand, in dem die Haltezunge 12 noch nicht in der Betätigungsrichtung B verschoben ist; rechts ist der Bereich 333, 337 mit unterbrochenen Linien dargestellt und in einem plastisch verformten Zustand, in dem die Haltezunge 12 aufgrund von Verschleiß des Bremsbelags 13 so weit in der Betätigungsrichtung B verschoben ist, dass der Bereich 333, 337 eine plastische Verformung zur Verschleißkompensation erfährt.

In der Figur 27 sind die zuvor beschriebenen Zustände, Grundzustand sowie zwei weitere plastisch verformte Zustände des Bereichs 333, 337 gezeigt. Bei einer Betätigung der Scheibenbremse 1 wird der Bremsbelagträger 11 und somit auch dessen Haltezunge 12 in der Betätigungsrichtung B verschoben. Dabei erreicht der Bereich 333, 337 vom Grundzustand beginnend den ersten plastisch verformte Zustand (P2), der einer ersten Verschleißkompensation entspricht. Bei weiter fortschreitendem Verschleiß des Bremsbelags kommt es zu einem weiteren plastisch verformten Zustand (P3), der einer weiteren Verschleißkompensation entspricht. Jedem dieser Zustände ist ein Hebelpunkt P₁, P₂, P₃ entlang des Bereichs 333, 337 und ein dazugehöriger Hebelarm L₁, L₂, L₃ zugeordnet. Des Weiteren ist mittels der unterhalb dieser Zustände gezeigten Draufsicht auf die Bereiche 333, 337, 335 deren Materialstärke am jeweiligen Hebelpunkt P₁, P₂, P₃ angedeutet. Die Materialstärke der Bereiche 333, 337, 335 wird hier mittels einer entlang ihrer Längsausdehnung variierenden Aussparung 338 festgelegt. Somit wird die Verformbarkeit des Bereichs 333, 337 mittels der Haltezunge 12 durch den Hebelpunkt P₁, P₂, P₃ an der Haltezunge 12, den Hebelarm L₁, L₂, L₃ senkrecht zur Bewegungsrichtung B vom Hebelpunkt P₁, P₂, P₃ zum Angriffspunkt der Haltezunge 12 an der Angriffslippe 339, sowie das Material und den Querschnitt des Bereichs 333, 337 vom jeweiligen Hebelpunkt P₁, P₂, P₃ bis zum Angriffspunkt der Haltezunge 12 an der Angriffslippe 339 bestimmt. Die in der Fig.27 gezeigten Verschleißzustände sind nur Beispiele möglicher plastischer Verformungszustände. Je nach tatsächlichem Verschleiß ergeben sich jeweilige Zwischenzustände.

### Ausführungsbeispiel 5

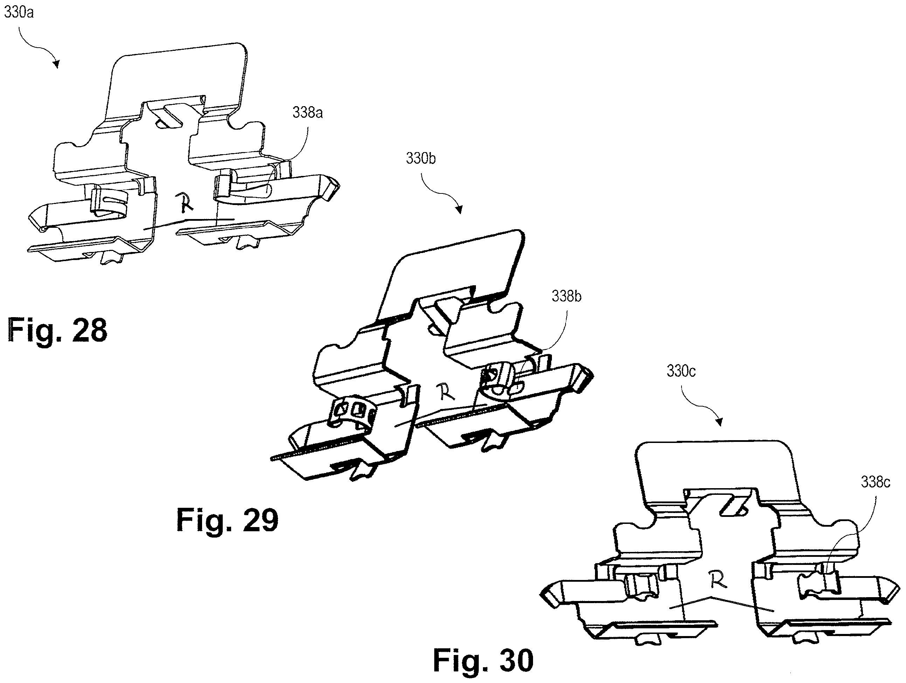

In den Figuren 28 bis 30 sind jeweils zwei einstückig ausgebildete Führungen 330a, 330b, 330c mit unterschiedlich geformten Bereichen 333, 337, 335 dargestellt, wobei die Rückstelleinrichtung alternativ an die rückwärtige Fläche R der Führung anschließt und auf dieser abrollt.

So zeigt die Figur 28 für jede der beiden Führungen eine einzige oder mehrere sanduhrförmige Aussparung 338a in den Bereichen 333, 337, 335, wodurch vorzugsweise ein kontinuierlicher Verlauf der Verformbarkeit erreicht werden kann. Alternativ kann die einzige oder mehrere sanduhrförmige Aussparung 338a in den Bereichen 333, 337, 335 auch derart konfigiriert sein, dass sich eine progressiver Verlauf der Verformbarkeit (Anstieg der Rückstellkraft bei fortschreitendem Verschleiß) erreicht werden kann. Bei der Figur 29 hingegen sind mehrere gurtlochartige Aussparungen 338b vorgesehen, wodurch ein diskreter Verlauf der Verformbarkeit erreicht werden kann. Die Figur 30 zeigt zwar auch mehrere Aussparungen 338c, diese befinden sich aber an den äußeren Rändern der Bereiche 333, 337, 335. Selbstverständlich kann auch lediglich der Bereich 333, 337 Aussparungen aufweisen, sodass der Übergangsbereich 335 keiner diesbezüglichen Bearbeitung bedarf.

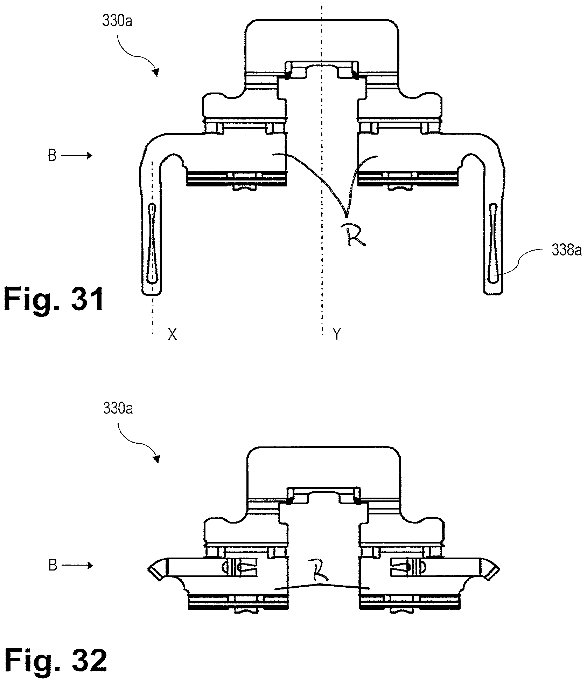

Die Figuren 31 und 32 zeigen ein Herstellungsverfahren der Rückstelleinrichtungen der vierten Führung 330 am Beispiel der Rückstelleinrichtungen mit den Bereichen 333, 337, 335 und der Aussparungen 338a aus Figur 28. In Figur 31 ist die Rückstelleinrichtung derart ausgeschnitten, dass ihre Längsachse X im Wesentlichen parallel zur Mittelachse Y der Führung 330a verläuft. Anschließend wird, wie in Figur 32 gezeigt, die Rückstelleinrichtung rechtwinklig umgebogen und parallel zur Betätigungsrichtung B ausgerichtet. Somit wird der Materialverschnitt verringert.

## Patentansprüche

1. Scheibenbremse (1) für ein Kraftfahrzeug, umfassend eine Führung (30, 130, 230), in der wenigstens eine Bremsbelaganordnung (10) bremswirksam verlagerbar geführt ist,
wobei die Bremsbelaganordnung (10) einen Bremsbelagträger (11) aufweist, an dem ein Fahrzeugbremsbelag (13) angebracht ist, der mit einer Bremsscheibe zum Erzielen einer Bremswirkung in Wechselwirkung bringbar ist, wobei der Bremsbelagträger (11) wenigsten eine Haltezunge (12) aufweist, wobei die Führung (30, 130, 230) wenigstens einen Aufnahmebereich (32) aufweist und wobei die Haltezunge (12) in dem wenigstens einen Aufnahmebereich (32) in einer Betätigungsrichtung (B) geführt aufnehmbar ist, wobei an der wenigstens einen Haltezunge (12) eine Rückstelleinrichtung anliegt, über die eine entgegen der Betätigungsrichtung (B) wirkende Rückstellkraft in Folge einer elastischen Verformung durch bremswirksame Auslenkung der Bremsbelaganordnung (10) auf diese aufbringbar ist, wobei die Rückstelleinrichtung einen elastisch verformbaren Bereich (33, 133, 233, 333) zur Rückstellung des Bremsbelagträgers (11) und einen plastisch verformbaren Bereich (37, 137, 237, 337) zur bleibenden Anpassung an einen Verschleiß des Fahrzeugbremsbelags (13) aufweist,
wobei die Rückstelleinrichtung aufgrund einer darauf in der Betätigungsrichtung (B) wirkenden Kraft entlang einer Fläche (F, R) des Aufnahmebereichs (32) erst dann plastisch verformbar ist, wenn die Rückstelleinrichtung aufgrund dieser Kraft eine vorbestimmte, ausschließlich elastische Verformung angenommen hat,
wobei der plastisch verformbare Bereich (37, 137, 237, 337) schleifenförmig ausgebildet ist und unmittelbar an der Haltezunge (12) anliegt sowie in der Lage ist, bei der plastischen Verformung entlang der Fläche (F, R) abzurollen.

2. Scheibenbremse (1) nach Anspruch 1,
**dadurch gekennzeichnet, dass** der plastisch verformbare Bereich (337) gleichzeitig auch der elastisch verformbare Bereich (333) ist, wobei vorzugsweise Aussparungen (338, 338a, 338b, 338c) in einer Längsrichtung des Bereichs (333, 337) die Verformbarkeit definieren.

3. Scheibenbremse (1) nach Anspruch 1,
**dadurch gekennzeichnet, dass** sich der elastisch verformbare Bereich (33, 133, 233) in einer von dem plastisch verformbaren Bereich (37, 137, 237) verschiedenen Richtung erstreckt.

4. Scheibenbremse (1) nach einem der Ansprüche 1 und 3,
**dadurch gekennzeichnet, dass** der elastisch verformbare Bereich (33, 133, 233) mindestens zwei Ausbuchtungen aufweist.

5. Scheibenbremse (1) nach einem der Ansprüche 1, 3 und 4,
**dadurch gekennzeichnet, dass** die Rückstelleinrichtung einen Anschlag (134, 234) aufweist, welcher in der Lage ist, den Federweg des elastisch verformbaren Bereichs (133, 233) zu begrenzen, so dass jede weitere Verschiebung der Haltezunge (12) in Betätigungsrichtung (B) zu einer plastischen Verformung des plastisch verformbaren Bereichs (137, 237) führt.

6. Scheibenbremse (1) nach einem der Ansprüche 1 und 3 bis 5,
**dadurch gekennzeichnet, dass** die Rückstelleinrichtung mindestens zwei miteinander wirkverbundene Elemente (M1, M2) aufweist, wobei ein Element (M1) nur den plastisch verformbaren Bereich (237) aufweist.

7. Scheibenbremse (1) nach einem der vorhergehenden Ansprüche,
**dadurch gekennzeichnet, dass** die Haltezunge (12) zur plastischen Verformung des plastisch verformbaren Bereichs (37, 137, 237, 337) auf diesem entlang gleitet, so dass der Bereich (37, 137, 237, 337) entsprechend seiner Anlagefläche mit der Haltezunge (12) umgeformt wird.

8. Scheibenbremse (1) nach einem der Ansprüche 1 und 3 bis 7,
**dadurch gekennzeichnet, dass** die Rückstelleinrichtung aus Blech geformt ist, welche einen auskragenden, elastisch verformbaren und schleifenförmigen Bereich (33, 133, 233) sowie einen sich daran anschließenden in den Aufnahmebereich (32) hineinragenden plastisch verformbaren Bereich (37, 137, 237) aufweist, wobei Aussparungen im Blech die elastische sowie plastische Verformbarkeit definieren.

9. Bremsbelaganordnung (10), wobei die Bremsbelaganordnung (10) einen Bremsbelagträger (11) aufweist, an dem ein Fahrzeugbremsbelag (13) angebracht ist, der mit einer Bremsscheibe zum Erzielen einer Bremswirkung in Wechselwirkung bringbar ist, wobei der Bremsbelagträger (11) wenigstens eine Haltezunge (12) aufweist und wobei die Führung (30, 130, 230) wenigstens einen Führungsabschnitt (32) aufweist, wobei die Haltezunge (12) in dem wenigstens einen Führungsabschnitt (32) in einer Betätigungsrichtung (B) geführt aufnehmbar ist, wobei an der wenigstens einen Haltezunge (12) eine Rückstelleinrichtung angebracht ist, über die eine entgegen der Betätigungsrichtung wirkende Rückstellkraft in Folge einer elastischen Verformung durch bremswirksame Auslenkung der Bremsbelaganordnung (10) auf diese aufbringbar ist, wobei die Rückstelleinrichtung einen elastisch verformbaren Bereich (33, 133, 233, 333) zur Rückstellung des Bremsbelagträgers (11) und einen plastisch verformbaren Bereich (37, 137, 237, 337) zur bleibenden Anpassung an einen Verschleiß des Fahrzeugbremsbelags (13) aufweist, wobei die Rückstelleinrichtung aufgrund einer darauf in der Betätigungsrichtung (B) wirkenden Kraft entlang einer Fläche (F, R) des Aufnahmebereichs (32) erst dann plastisch verformbar ist, wenn die Rückstelleinrichtung aufgrund dieser Kraft eine vorbestimmte, ausschließlich elastische Verformung angenommen hat, und wobei der plastisch verformbare Bereich (37, 137, 237, 337) schleifenförmig ausgebildet ist und unmittelbar an der Haltezunge (12) anliegt sowie in der Lage ist, bei der plastischen Verformung entlang der Fläche (F, R) abzurollen.

10. Bremsbelaganordnung (10) für eine Scheibenbremse (1) nach Anspruch 9, wobei die Rückstelleinrichtung im elastisch verformbaren Bereich (33, 133, 233, 333) zur Rückstellung des Bremsbelagträgers (11) und/oder im plastisch verformbaren Bereich (37, 137, 237, 337) zur bleibenden Anpassung an einen Verschleiß des Fahrzeugbremsbelags (13) zum Erhalten eines kontinuierlichen oder eines progressiven Verlaufs der Verformbarkeit für wenigstens eine der beiden Führungen (i) eine oder mehrere sanduhrförmige Aussparungen (338a) aufweist, oder (ii) zum Erhalten eines diskreten Verlaufs der Verformbarkeit mehrere gurtlochartige Aussparungen (338b) vorgesehen sind, oder (iii) mehrere Aussparungen (338c) an den äußeren Rändern der Bereiche (333, 337, 335).

## Claims

1. Disc brake (1) for a motor vehicle, comprising a guide (30, 130, 230), in which at least one brake lining arrangement (10) is guided such that it can be moved in a manner which is active in terms of braking, the brake lining arrangement (10) having a brake lining carrier (11), to which a vehicle brake lining (13) is attached which can be brought into interaction with a brake disc in order to achieve a braking effect, the brake lining carrier (11) having at least one retaining tongue (12), the guide (30, 130, 230) having at least one receiving region (32), and it being possible for the retaining tongue (12) to be received in the at least one receiving region (32) in a manner which is guided in an actuating direction (B), a restoring device bearing against the at least one retaining tongue (12), via which restoring device a restoring force which acts counter to the actuating direction (B) can be applied to the brake lining arrangement (10) as a consequence of an elastic deformation by way of deflection of the said brake lining arrangement (10) in a manner which is active in terms of braking, the restoring device having an elastically deformable region (33, 133, 233, 333) for restoring the brake lining carrier (11), and a plastically deformable region (37, 137, 237, 337) for permanent adaptation to wear of the vehicle brake lining (13), the restoring device being plastically deformable on account of a force which acts on it in the actuating direction (B) along a surface (F, R) of the receiving region (32) only when the restoring force has assumed a predefined, exclusively elastic deformation on account of the said force, the plastically deformable region (37, 137, 237, 337) being of loop-shaped configuration, bearing directly against the retaining tongue (12), and being capable of rolling along the surface (F, R) in the case of the plastic deformation.

2. Disc brake (1) according to Claim 1, **characterized in that** the plastically deformable region (337) is at the same time also the elastically deformable region (333), cut-outs (338, 338a, 338b, 338c) in a longitudinal direction of the region (333, 337) preferably defining the deformation capability.

3. Disc brake (1) according to Claim 1, **characterized in that** the elastically deformable region (33, 133, 233) extends in a direction which is different from the plastically deformable region (37, 137, 237).

4. Disc brake (1) according to either of Claims 1 and 3, **characterized in that** the elastically deformable region (33, 133, 233) has at least two bulges.

5. Disc brake (1) according to one of Claims 1, 3 and 4, **characterized in that** the restoring device has a stop (134, 234) which is capable of limiting the spring travel of the elastically deformable region (133, 233), with the result that any further displacement of the retaining tongue (12) in the actuating direction (B) leads to a plastic deformation of the plastically deformable region (137, 237).

6. Disc brake (1) according to one of Claims 1 and 3 to 5, **characterized in that** the restoring device has at least two elements (M1, M2) which are operatively connected to one another, one element (M1) having only the plastically deformable region (237).

7. Disc brake (1) according to one of the preceding claims, **characterized in that** the retaining tongue (12) slides along on the plastically deformable region (37, 137, 237, 337) for the plastic deformation of the said plastically deformable region (37, 137, 237, 337), with the result that the region (37, 137, 237, 337) is deformed in accordance with its bearing face against the retaining tongue (12).

8. Disc brake (1) according to one of Claims 1 and 3 to 7, **characterized in that** the restoring device is formed from sheet metal, which restoring device has a projecting, elastically deformable and loop-shaped region (33, 133, 233) and an adjoining plastically deformable region (37, 137, 237) which protrudes into the receiving region (32), cut-outs in the sheet metal defining the elastic and plastic deformation capability.

9. Brake lining arrangement (10), the brake lining arrangement (10) having a brake lining carrier (11), to which a vehicle brake lining (13) is attached which can be brought into interaction with a brake disc in order to achieve a braking effect, the brake lining carrier (11) having at least one retaining tongue (12), and the guide (30, 130, 230) having at least one guide section (32), it being possible for the retaining tongue (12) to be received in the at least one guide section (32) in a manner which is guided in an actuating direction (B), a restoring device being attached to the at least one retaining tongue (12), via which restoring device a restoring force which acts counter to the actuating direction can be applied to the brake lining arrangement (10) as a consequence of an elastic deformation by way of deflection of the said brake lining arrangement (10) in a manner which is active in terms of braking, the restoring device having an elastically deformable region (33, 133, 233, 333) for restoring the brake lining carrier (11), and a plastically deformable region (37, 137, 237, 337) for permanent adaptation to wear of the vehicle brake lining (13), the restoring device being plastically deformable on account of a force which acts on it in the actuating direction (B) along a surface (F, R) of the receiving region (32) only when the restoring force has assumed a predefined, exclusively elastic deformation on account of the said force, and the plastically deformable region (37, 137, 237, 337) being of loop-shaped configuration, bearing directly against the retaining tongue (12), and being capable of rolling along the surface (F, R) in the case of the plastic deformation.

10. Brake lining arrangement (10) for a disc brake (1) according to Claim 9, the restoring device having (i) one or a plurality of hourglass-shaped cut-outs (338a) in the elastically deformable region (33, 133, 233, 333) for restoring the brake lining carrier (11) and/or in the plastically deformable region (37, 137, 237, 337) for permanent adaptation to wear of the vehicle brake lining (13) in order to obtain a continuous or a progressive profile of the deformation capability for at least one of the two guides, or (ii) a plurality of belt hole-shaped cut-outs (338b) being provided in order to obtain a discrete profile of the deformation capability, or (iii) a plurality of cut-outs (338c) being provided on the outer edges of the regions (333, 337, 335).

## Revendications

1. Frein à disque (1) pour un véhicule automobile, comprenant un guidage (30, 130, 230) dans lequel est guidé de manière mobile au moins un ensemble de garniture de frein (10) de manière à produire une action de freinage,
l'ensemble de garniture de frein (10) comprenant un support de garniture de frein (11) sur lequel est montée une garniture de frein de véhicule (13) qui peut être amenée à interagir avec un disque de frein afin de générer une action de freinage, le support de garniture de frein (11) comprenant au moins une languette de retenue (12), le guidage (30, 130, 230) comprenant au moins une zone de logement (32) et la languette de retenue (12) pouvant être logée dans l'au moins une zone de logement (32) de manière guidée dans une direction d'actionnement (B), un dispositif de rappel s'appuyant contre l'au moins une languette de retenue (12), par le biais duquel une force de rappel agissant en sens inverse de la direction d'actionnement (B) peut être appliquée sur l'ensemble de garniture de frein (10) suite à une déformation élastique due à une déviation, produisant une action de freinage, de l'ensemble de garniture de frein, le dispositif de rappel comprenant une zone déformable élastiquement (33, 133, 233, 333) pour le rappel du support de garniture de frein (11) et une zone déformable plastiquement (37, 137, 237, 337) pour l'adaptation permanente à une usure de la garniture de frein de véhicule (13),
le dispositif de rappel, du fait d'une force agissant sur celui-ci dans la direction d'actionnement (B) le long d'une surface (F, R) de la zone de logement (32) ne pouvant être déformé plastiquement que lorsque le dispositif de rappel, du fait de cette force, a adopté une déformation exclusivement élastique prédéfinie,
la zone déformable plastiquement (37, 137, 237, 337) étant réalisée en forme de boucle et s'appuyant directement contre la languette de retenue (12) et étant à même de se dérouler le long de la surface (F, R) dans le cas de la déformation plastique.

2. Frein à disque (1) selon la revendication 1,
**caractérisé en ce que** la zone déformable plastiquement (337) est en même temps également la zone déformable élastiquement (333), des évidements (338, 338a, 338b, 338c) dans une direction longitudinale de la zone (333, 337) définissant de préférence la déformabilité.

3. Frein à disque (1) selon la revendication 1,
**caractérisé en ce que** la zone déformable élastiquement (33, 133, 233) s'étend dans une direction différente de la zone déformable plastiquement (37, 137, 237) .

4. Frein à disque (1) selon l'une des revendications 1 et 3,
**caractérisé en ce que** la zone déformable élastiquement (33, 133, 233) comprend au moins deux renflements.

5. Frein à disque (1) selon l'une des revendications 1, 3 et 4,
**caractérisé en ce que** le dispositif de rappel comprend une butée (134, 234), laquelle est à même de limiter la course de ressort de la zone déformable élastiquement (133, 233), de sorte que chaque autre déplacement de la languette de retenue (12) dans la direction d'actionnement (B) mène à une déformation plastique de la zone déformable plastiquement (137, 237).

6. Frein à disque (1) selon l'une des revendications 1 et 3 à 5,
**caractérisé en ce que** le dispositif de rappel comprend au moins deux éléments (M1, M2) reliés fonctionnellement les uns aux autres, un élément (M1) comprenant seulement la zone déformable plastiquement (237) .

7. Frein à disque (1) selon l'une des revendications précédentes,
**caractérisé en ce que** la languette de retenue (12), pour la déformation plastique de la zone déformable plastiquement (37, 137, 237, 337), glisse le long de et sur celle-ci, de sorte que la zone (37, 137, 237, 337) soit déformée de manière correspondante à sa surface d'appui contre la languette de retenue (12).

8. Frein à disque (1) selon l'une des revendications 1 et 3 à 7,
**caractérisé en ce que** le dispositif de rappel est formé à partir de tôle, lequel comprend une zone (33, 133, 233) en saillie, déformable élastiquement et en forme de boucle ainsi qu'une zone déformable plastiquement (37, 137, 237) s'y raccordant et pénétrant dans la zone de logement (32), des évidements dans la tôle définissant la déformabilité élastique ainsi que plastique.

9. Ensemble de garniture de frein (10),
l'ensemble de garniture de frein (10) comprenant un support de garniture de frein (11) sur lequel est montée une garniture de frein de véhicule (13) qui peut être amenée à interagir avec un disque de frein afin de générer une action de freinage, le support de garniture de frein (11) comprenant au moins une languette de retenue (12) et le guidage (30, 130, 230) comprenant au moins une partie de guidage (32), la languette de retenue (12) pouvant être logée dans l'au moins une partie de guidage (32) de manière guidée dans une direction d'actionnement (B), un dispositif de rappel étant monté sur l'au moins une languette de retenue (12), par le biais duquel une force de rappel agissant en sens inverse de la direction d'actionnement peut être appliquée sur l'ensemble de garniture de frein suite à une déformation élastique due à une déviation, produisant une action de freinage, de l'ensemble de garniture de frein (10), le dispositif de rappel comprenant une zone déformable élastiquement (33, 133, 233, 333) pour le rappel du support de garniture de frein (11) et une zone déformable plastiquement (37, 137, 237, 337) pour l'adaptation permanente à une usure de la garniture de frein de véhicule (13), le dispositif de rappel, du fait d'une force agissant sur celui-ci dans la direction d'actionnement (B) le long d'une surface (F, R) de la zone de logement (32), ne pouvant être déformé plastiquement que lorsque le dispositif de rappel, du fait de cette force, a adopté une déformation exclusivement élastique prédéfinie, et la zone déformable plastiquement (37, 137, 237, 337) étant réalisée en forme de boucle et s'appuyant directement contre la languette de retenue (12) et étant à même de se dérouler le long de la surface (F, R) dans le cas de la déformation plastique.

10. Ensemble de garniture de frein (10) pour un frein à disque (1) selon la revendication 9,
le dispositif de rappel, dans la zone déformable élastiquement (33, 133, 233, 333) pour le rappel du support de garniture de frein (11) et/ou dans la zone déformable plastiquement (37, 137, 237, 337) pour l'adaptation permanente à une usure de la garniture de frein de véhicule (13), pour l'obtention d'une allure continue ou d'une allure progressive de la déformabilité, comprenant pour au moins l'un des deux guidages (i) un ou plusieurs évidements (338a) en forme de sabliers, ou (ii) pour l'obtention d'une allure discrète de la déformabilité, plusieurs évidements (338b) en forme de trous de ceinture étant prévus, ou (iii) plusieurs évidements (338c) étant prévus au niveau des bords extérieurs des zones (333, 337, 335).
